# EUROPEAN PATENT APPLICATION

(11) **EP 2 688 348 A1**
(43) Date of publication of application: **22.01.2014**
(21) Application number: 12305856.2
(22) Date of filing: 16.07.2012
(51) Int. Cl.: H04W 72/04

(54) **Apparatuses, Methods, and Computer Programs for Base Station Transceivers**

(71) Applicant: Alcatel Lucent, 75007 Paris (FR)
(72) Inventor: Aydin, Osman, 70569 Stuttgart (DE); Boccardi, Federico, 20063 Cernusco Sul Naviglio (MI) (IT)
(74) Representative: 2SPL Patentanwälte

(57) **Abstract**

Embodiments relate to apparatuses, methods, and computer programs for base station transceivers. Embodiments provide an apparatus (10) for a base station transceiver (100) for a mobile communication system (400). The mobile communication system (400) comprises a mobile transceiver (300), which is to be associated to a neighbor base station transceiver (200). The apparatus (10) comprises means for associating (12) the mobile transceiver (300) with the neighbor base station transceiver (200) and means for scheduling (14) a radio resource from a plurality of radio resources for communicating with another mobile transceiver and for determining a subset of radio resources from the plurality of radio resources for enabling a communication between the neighbor base station transceiver (200) and the mobile transceiver (300) prior to associating the mobile transceiver (300) with the neighbor base station transceiver (200). Embodiments provide another apparatus (20) for a base station transceiver (200). The apparatus (20) comprises means for receiving (22) information on a subset of radio resources from a plurality of radio resources from the neighbor base station transceiver (100) and means for scheduling (24) a radio resource from the subset of the plurality of radio resources for communicating with the mobile transceiver (300).

## Description

Embodiments of the present invention relate to mobile communication systems, in particular but not exclusively to sharing of resources in mobile communication systems between multiple operators.

### Background

Demands for mobile services, especially for data services, are steadily increasing. With the introduction of mobile devices such as cell phones, tablet computers, laptop or notebook computers, etc., expectations on service availability of users have been increasing. On the network operator side the capacity of mobile communication networks is increased accordingly, therefore more and more transmission points, such as base station transceivers, access points, etc., are installed. Hardware costs and installation costs are major contributors to the overall costs that arise to operators. In the wireless world, the improvement of network efficiency and the reduction of costs become more and more important. One strategy that is discussed among operators is to share the resources, i.e. multiple operators provide their services to subscribers using the same network hardware. The sharing of resources can be accomplished in different ways. One possibility is to share the infrastructure of a mobile network, respectively the base stations, such as an eNodeB (eNB), and/or the backhaul network. A further method is to share the spectrum itself, i.e. to subdivide the bandwidth in sub-bands, which are then assigned to different operators.

When multiple operators share hardware resources and/or frequency resources, strategies are needed, on how the resources, especially the radio resources, which are used by the subscribers of the operators, are shared and assigned between the operators. Especially in high load situations, i.e. when the network capabilities are almost exhausted, efficient and transparent resource assignment mechanisms are desirable.

At the same time, in mobile communication networks heterogeneous architectures become more and more important. Heterogeneous Networks (HetNets) are networks, which utilize cell types of different sizes, as, for example, macro cells and small cells, such as metro cells, micro or pico cells, and femto cells. Such cells are established by base station transceivers for which their coverage areas are determined by their transmission power and interference condition. Small cells are cells having a smaller coverage area than macro cells. In some network scenarios the small cells' coverage area can be surrounded by the coverage area of a macro cell. The small cells can be deployed to extend the capacity of the network.

With regard to standardization, within the 3^{rd} Generation Partnership Project (3GPP), HetNets have been added to the scope of the Long Term Evolution-Advanced (LTE-A) work item. Since the cells or base stations in such networks may utilize the same frequency resources, such architectures can suffer from interference created by the overlapping coverage areas of these cells. Therefore enhanced Inter-Cell Interference Coordination (eICIC) for co-channel HetNet deployment is one of the key techniques for LTE Release 10 (Rel-10). Co-channel HetNets comprise macro cells and small cells operating on the same frequency channel. Such deployments present some specific interference scenarios for which eICIC techniques are utilized.

### Summary

Embodiments are based on the finding that in the wireless world to improve efficiency and to reduce cost, it becomes more and more popular to share resources. The sharing of resources can be accomplished in different ways. One possibility is to share the infrastructure of a mobile network respectively the eNB and/or the backhaul network and/or the core network. A further concept is to share licensed and unlicensed (white space) frequency spectrum. Both of these sharing types (hardware and spectrum) can be combined. It is a further finding that advanced algorithms for at least MAC (Medium Access Control) layer procedures and RRM (Radio Resource Management) may be introduced to enable sharing between operators.

According to one finding, if two or more operators are sharing one eNB/one spectrum resource, the sharing procedures may guarantee fairness between the operators with regard to costs to be billed for the used resource and radio efficiency for the used resources. Enhancements through HetNet or small cells can be introduced to increase spectral efficiency, e.g. in LTE. This aspect further complexes the sharing scenario, as small cells could be introduced as shared, partially shared, or non-shared network elements.

It is another finding that HetNets or small cells make the sharing mechanisms more complex, as small cells could be introduced as shared, partially shared, or non-shared network elements within a shared macro cell layer. Hence, a concept may be desirable to provide rules under which an operator is allowed to hand-over from a shared cell, e.g. a macro cell, to a non-shared or partially shared cell, e.g. a small cell, or under which an operator is allowed to use a non-shared or partially shared cell at all. Hence, it may be desirable to provide an improved concept for HetNets, and the combination of HetNets with operator sharing. A partially shared cell can be considered a cell on which operators have a resource sharing agreement, e.g. the operator owning or operating the cell allows another operator to use the cell up to a certain share of the resources such as 10%, 20%, 30%, 40%, etc. In some embodiments the share may refer to bandwidth, i.e. the other operator would be allowed to use a certain or predetermined share of the bandwidth. In other embodiments the share may refer to a certain time pattern, i.e. the other operator is allowed to use a certain subset of repetitive radio frames or time slots, Time Transmission Intervals (TTIs), respectively. In embodiments any share of any of the radio resources available at the partially shared cell may be accessible by the other operator.

Embodiments are based on the finding that resource coordination can be carried out between base station transceivers of a mobile communication system. That is to say, that one base station transceiver may determine a subset of available radio resources, which can be used by the other base station transceiver. It is another finding that, especially in a HetNet scenario, macro cells can coordinate small cells within their coverage.

Embodiments provide an apparatus for a base station transceiver for a mobile communication system. Hence, embodiments may provide said apparatus to be operated in or by a base station transceiver. The apparatus will also be referred to as base station transceiver apparatus. Embodiments may also provide a base station transceiver comprising said base station transceiver apparatus. In embodiments the resource coordination can be carried out between at least two base station transceivers. Hence, one base station transceiver may provide information on resources to be used by another base station transceiver. Embodiments also provide an apparatus for the other base station transceiver for the mobile communication system. Hence, embodiments may provide said apparatus to be operated in or by the other base station transceiver. The apparatus will also be referred to as base station transceiver apparatus. Embodiments may also provide a base station transceiver comprising said base station transceiver apparatus. Embodiments may also provide a system comprising said at least two base station transceivers.

In embodiments the mobile communication system may, for example, correspond to one of the 3^{rd} Generation Partnership Program (3GPP)-standardized mobile communication networks, where the term mobile communication system is used synonymously to mobile communication network. The mobile or wireless communication system may correspond to, for example, a Long-Term Evolution (LTE), an LTE-Advanced (LTE-A), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc., or mobile communication networks with different standards, for example, a Worldwide Inter-operability for Microwave Access (WIMAX) network.

A base station transceiver can be operable to communicate with one or more active mobile transceivers and the base station transceiver can be located in or adjacent to a coverage area of another base station transceiver, e.g. a macro cell base station transceiver or a CSG base station transceiver. Hence, embodiments may provide a mobile communication system comprising one or more mobile transceivers and one or more base station transceivers, wherein the base station transceivers may establish macro cells or small cells, as e.g. pico-, metro-, or femto cells. A mobile transceiver may correspond to a smartphone, a cell phone, user equipment, a laptop, a notebook, a personal computer, a Personal Digital Assistant (PDA), a Universal Serial Bus (USB) -stick, a car, etc. A mobile transceiver may also be referred to as User Equipment (UE) or mobile in line with the 3GPP terminology.

A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, a remote radio head, a transmission point etc., which may be further subdivided in a remote unit and a central unit.

A mobile transceiver can be associated with the base station transceiver or cell. The term cell refers to a coverage area of radio services provided by a base station transceiver, e.g. a NodeB, an eNodeB, a remote radio head, a transmission point, etc. A base station transceiver may operate multiple cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas.

In other words, in embodiments the mobile communication system may correspond to a HetNet, which utilizes cells of different sizes, as, for example, macro cells and small cells, where the coverage area of a small cell is smaller than the coverage area of a macro cell. A small cell may correspond to a metro cell, a micro cell, a pico cell, a femto cell, etc. Such cells are established by base station transceivers for which their coverage areas are determined by their transmission power and interference condition. In some embodiments a small cell's coverage area can be surrounded by the coverage area of a macro cell established by another base station transceiver. The small cells can be deployed to extend the capacity of the network. A metro cell may therefore be used to cover a smaller area than a macro cell, e.g. a metro cell may cover a street or a section in a metropolitan area. For a macro cell the coverage area may have a diameter in the order of one or more kilometers, for a micro cell the coverage area may have a diameter below a kilometer, and for a pico cell the coverage area may have a diameter below a 100m. A femto cell may be the smallest cell and it may be used to cover a household or gate section at the airport, i.e. its coverage area may have a diameter below 50m. Thus, a base station transceiver may also be referred to as cell.

In the following two base station transceiver apparatuses will be detailed as provided in embodiments. The first base station transceiver apparatus is operable to determine a subset of a plurality of radio resources, which the second base station transceiver apparatus uses for scheduling within its coverage area. To the second base station will also be referred to as neighbor base station. For example, the first base station can establish a macro cell and the second base station transceiver can establish a small cell within the coverage of the macro cell. Hence, in the following the term "neighboring base station transceiver" shall indicate that the coverage areas of a base station transceiver and its neighboring base station transceiver at least overlap, in some embodiments the overlap can be all-embracing, i.e. one coverage area may be surrounded by the other coverage area. The mobile communication system comprises a mobile transceiver, which is associated to the base station transceiver or which is to be associated with a neighbor base station transceiver.

The base station transceiver apparatus comprises means for associating the mobile transceiver with the neighbor base station transceiver. The means for associating may correspond to an associator operable to associate the mobile transceiver to the neighbor base station transceiver. The means for associating may correspond to a controller, a microcontroller, a processor, etc. The means for associating may correspond to a layer 3 protocol entity, e.g. an RRC entity in an LTE protocol stack. The term associating may correspond to a re-associating, e.g. when the mobile transceiver is first associated to the base station transceiver and then handed over to the neighbor base station transceiver, and is hence re-associated from the base station transceiver to the neighbor base station transceiver. The associating may also refer to an admission of the mobile transceiver to services of the neighbor base station transceiver, which is not allowed to freely provide its services to the mobile, e.g. because of not having a license for using the respective spectrum. The neighbor base station transceiver may then inform the base station transceiver that it would like to serve said mobile. The base station transceiver may then associate said mobile transceiver with the neighbor base station transceiver by granting radio resources to the neighbor base station transceiver.

Moreover, the base station transceiver apparatus comprises means for scheduling a radio resource from a plurality of radio resources for communicating with another mobile transceiver and for determining a subset of radio resources from the plurality of radio resources for enabling a communication between the neighbor base station transceiver and the mobile transceiver prior to associating the mobile transceiver with the neighbor base station transceiver. In some embodiments the other mobile transceiver can correspond to the mobile transceiver which is handed over between the two base station transceivers. The means for scheduling may correspond to a scheduler operable to schedule the radio resource and to determine the subset of radio resources. The means for scheduling may correspond to a controller, a micro controller or processor, etc. The means for scheduling may correspond to a layer 2 entity, e.g. a MAC scheduler. The associating can be a handover of the mobile transceiver from the base station transceiver to the neighbor base station transceiver or it can be admitting the mobile transceiver to access the neighbor base station transceiver, e.g. by providing the subset of radio resources for said access to the neighbor base station transceiver.

Hence, the base station transceiver apparatus is operable to determine a subset of radio resources for the neighbor base station transceiver before the mobile transceiver gets associated. The plurality of radio resources, which are available to the base station transceivers, may correspond to any radio resources such as time, frequency, code, spatial, etc. resources. The time resources may comprise, radio frames, radio sub-frames, time slots, TTIs, symbols, etc. The frequency resources may comprise carriers, sub-carriers, sub-bands, etc. The code resources may comprise channelization codes, scrambling codes, etc. The spatial resources may comprise beams, spatial sub-channels, etc. The subset of the plurality of radio resources may correspond to any subset of combinations of these radio resources. The base station transceivers may operate from the same plurality of radio resources, i.e. they may operate at least partly in the same overall frequency band and on the same overall time resources. Said plurality of radio resources may then be subdivided, separated or shared by the base station transceiver apparatus using the subset of radio resources.

In some embodiments the base station transceiver and the neighbor base station transceiver are shared between two or more operators. The associating may depend on a frame contract between the operators. A relation between the subset of radio resources and the plurality of radio resources can be predetermined, e.g. based on said frame contract. As mentioned above, the neighbor base station transceiver may be partially shared, i.e. an operator may only be allowed to use a certain share of the resources of the neighbor base station transceiver.

In other words, in embodiments non-shared or partially shared small cells can be introduced into an environment where sharing of resources is implemented. The small cell integration into a Het-Net scenario may provide operators differentiation possibilities, which can be enabled or controlled by introducing sharing concepts. In particular, embodiments may enable handover from a macro to a small cell or vice versa in a sharing network. Hence, in embodiments the base station transceiver may have a coverage area, which surrounds the coverage area of the neighbor base station transceiver.

In embodiments the base station transceiver apparatus may further comprise means for communicating with the neighbor base station transceiver. The means for communicating can correspond to a communicator operable to communicate with the neighbor base station transceiver. The means for communicating can correspond to a wireless or wired interface, through which data can be exchanged between the base station transceivers.

Moreover, according communication protocols may be established for said communication. One example would be an X2 interface between two eNodeBs (eNBs) of an LTE network. The means for communicating can be operable to communicate information on the subset of radio resources to the neighbor base station transceiver. Moreover, information on a Quality of Service (QoS) of the mobile transceiver, information on a lifetime of the subset of the subset of radio resource, and/or information on a trigger on when the subset of resources should not be used by the neighbor base station transceiver anymore, can be communicated to the neighbor base station transceiver.

In other words, the base station transceiver determining the subset of the radio resources may communicate information on the subset to the other base station transceiver. Together with the information on the subset further information on the subset, such as a validity time, an expiration time, etc. can be provided to the other base station transceiver. Hence, the base station transceiver, which schedules the subset of radio resources to the neighbor base station transceiver, may assume a role of a master base station in that it takes control over the radio resources used by the neighbor base station, which may also be referred to as slave base station transceiver. In the following the terms "master" base station transceiver or base station transceiver apparatus and "slave" base station transceiver or base station transceiver apparatus will be used. These terms shall help distinguishing the master entity, which decides on the associating and on the subset of radio resources, from the slave entity, which associates with the mobile transceiver and uses the subset of radio resources to serve said mobile transceiver. The terms shall not imply any further features or restrictions of the respective entities.

In some embodiments, information on the condition or situation of the neighbor base station can be taken into account at the master base station. Hence, in some embodiments the means for communicating can be further operable to receive information on a load condition or a predicted performance of the mobile transceiver from the neighbor base station transceiver prior to associating. The means for associating can be operable to base a decision on associating the mobile transceiver with the neighbor base station transceiver on the information on the load condition or the predicted performance of the mobile transceiver of the neighbor base station transceiver. Hence in embodiments the base station transceiver apparatus may take load conditions and the current and future performance of the mobile transceiver, in particular Quality of Service parameters, into account. In embodiments different criteria based on which handover or admission decisions can be made are conceivable. For example, the frame contract between different operators, i.e. a mobile of a first operator may not be handed over to or served by a partially shared small cell of a second operator, if the share of the radio resource in the small cell is used up by mobiles of the first operator already. If there are still resources of the share available for the first operator then the handover or admission decision can be based on an overall network performance, i.e. an improvement or even optimization of the overall network capacity. Another criteria is the individual performance of the mobile itself, hence, the mobile may be handed over to the small cell if an improvement in service quality for the mobile can be foreseen or estimated. In further embodiments a combination of any of these criteria is conceivable.

The means for scheduling can be operable to determine information on a load condition of the base station transceiver itself. Hence the load condition in one or more of its own cells may also be considered. The means for associating can be operable to base a decision on associating the mobile transceiver with the neighbor base station transceiver on the information on the load condition of the base station transceiver. Hence a handover of the mobile from a shared macro cell to a partially shared small cell or its admission to the small cell may as well depend on the load situation in the macro cell.

The base station transceiver apparatus may further comprise means for determining information on a measurement configuration. The means for determining may correspond to a determiner operable to determine the measurement configuration information. The determiner may correspond to a controller, a micro controller or processor, etc. The measurement configuration refers to a signal quality measurement carried out by the mobile transceiver on signals received from the neighboring base station transceiver. The quality of the radio signals may, e.g., be measured in terms of a Reference Signal Strength Indicator (RSSI), a Reference Signal Receive Power (RSRP), Reference Signal Receive Quality (RSRQ), Channel Quality Information (CQI), a Signal-to-Noise-Ratio (SNR), a Signal-to-Interference-and-Noise-Ratio (SINR), a Signal-to-Interference-Ratio (SIR), a Bit-Error-Ratio (BER), a Frame-Error-Ratio (FER), a block-error-rate, etc. Hence, the master base station transceiver apparatus may configure measurements at one or more mobile transceivers to monitor other cells in the network, e.g. in the HetNet.

The means for scheduling can be further operable to provide information radio resources for another neighbor base station transceiver to the means for determining the information on the measurement configuration. That is to say that the scheduler, based on used or unused radio resources may inform the means for determining on resources of a new cell for which a measurement shall be configured or which shall be switched on. In other words, the means for determining can be informed by the means for scheduling on radio resources, which could be used by a neighbor cell. The means for determining may then configure according measurements at a mobile transceiver, allowing the means for determining to seek for such a neighbor cell based on the corresponding measurement results. In other embodiments the means for determining may already have knowledge on a neighbor cell, which could use at least some of the radio resources informed by the means for scheduling. For example, such knowledge may be obtained from a database, for example, the informed radio resources or a subset thereof may serve as an entry value into said data base. Hence, in some embodiments the means for determining may switch a neighbor cell on based on the radio resources informed by the means for scheduling. The apparatus can be further operable to receive information on a measurement result from the mobile transceiver and the means for scheduling can be operable to determine the subset of radio resources based on the information on the measurement result. Hence, the measurement results, i.e. the signal quality of the neighbor cell may be taken into account before a decision on the handover is carried out, or an admission to the neighbor cell is carried out, respectively.

Hence in embodiments, for example in an LTE network, a conditional handover procedure may be triggered using a MAC (Medium Access Control) and RRC (Radio resource Control) interworking, which may utilize the above-described mechanism how to control the access to the small cell. The signaling process between the macro and small cell will be detailed subsequently focusing on how and when to deliver shared frequency resources to a non-shared small cell. In LTE there may not be a need to indicate neighboring cells in the serving cell's system information to enable the UE to search and measure a cell for the case of intra frequency neighboring cells (no measurement gaps needed). For inter frequency neighboring cells the carrier frequencies may need to be indicated to the UE (measurement gaps needed). For example, in RRC_CONNECTED state, an LTE UE may follow the measurement configurations as given by the RRC layer (see 3GPP TS 36.300). Hence, in LTE a mobile or UE may provide measurement reports on a new cell, i.e. a cell a serving cell would not necessarily be aware of.

Furthermore, the apparatus can be further operable to determine, based on the information on the measurement results, whether an overall radio resource efficiency can be increased by the associating. In other words, if the mobile reports on the signal quality of a neighbor cell, the serving cell or the master base station transceiver may decide on whether to handover the mobile to said neighbor cell based on one or more criteria. Aside from the frame contract between operators of the respective cell, the overall capacity or radio resource efficiency can be taken into account. That is to say that in some embodiments such a handover or admission decision may depend on whether the handover would allow improving the resource efficiency, i.e. whether more mobiles could be served, whether an overall data rate can be increased, whether an overall grade of service could be improved, etc.

As mentioned above, embodiments also provide a base station transceiver apparatus for the neighbor base station transceiver, which can also be referred to as slave base station transceiver. From the perspective of the slave base station transceiver the master base station transceiver is a neighbor base station transceiver. From this perspective the mobile communication system comprises a mobile transceiver, which is to be associated by or through a neighbor base station transceiver (note that from this perspective the neighbor base station transceiver corresponds to the above master base station transceiver) to the base station transceiver (which is now the former neighbor base station transceiver, i.e. the slave base station transceiver). The base station transceiver apparatus comprises means for receiving information on a subset of radio resources from a plurality of radio resources from the neighbor base station transceiver. The means for receiving may correspond to a receiver operable to receive the information on the subset. In embodiments the means for receiving can correspond to a wireless or wired interface, through which data can be exchanged between the base station transceivers. Moreover, according communication protocols may be established for said communication. One example would be an X2 interface between two eNodeBs (eNBs) of an LTE network.

The (slave) base station transceiver apparatus further comprises means for scheduling a radio resource from the subset of the plurality of radio resources for communicating with the mobile transceiver. The means for scheduling may correspond to a scheduler operable to schedule the radio resource from the subset. The means for scheduling may correspond to a controller, a micro controller or processor, etc. The means for scheduling may correspond to a layer 2 entity, e.g. a MAC scheduler.

In line with the above, the base station transceiver and the neighbor base station transceiver can be shared between two or more operators, wherein the associating may depend on a frame contract between the operators as a relation between the subset of radio resources and the plurality of radio resources can be predetermined. The means for receiving can be further operable to receive information on a QoS of the mobile transceiver, information on a lifetime of the subset of the subset of radio resource, and/or information on a trigger on when the subset of resources should not be used by the base station transceiver anymore. The means for scheduling can be operable to base a decision on which radio resources from the subset to schedule on the received information. For example, the means for scheduling may take the QoS information into account in order achieve the QoS for the mobile transceiver using the subset of radio resources. The means for scheduling may use the subset for scheduling until a lifetime for the subset has expired or until a trigger condition has been fulfilled.

In embodiments the base station transceiver apparatus may further comprise means for providing information on a load condition of the base station transceiver or a predicted performance of the mobile transceiver to the neighbor base station transceiver. The means for providing may correspond to a provider operable to provide the information. The means for providing may correspond to means for communicating, such as an interface to the neighbor (master) base station transceiver, such as the X2 in LTE. Hence, information on a load condition, i.e. on utilization of the radio resources available, on a number of users already served, UE distribution ratio according to operators, on a data rate already provided in the uplink or in the downlink, etc. can be provided for the master base station transceiver to take into account and to enable the above described handover decision. Moreover, the means for providing can be further operable to request radio resources from the neighbor (master) base station transceiver based on a load condition of the (slave) base station transceiver. That is to say that a protocol or a communication between the two base station transceiver apparatuses may be enabled in order to coordinate the radio resource distribution between them. The (slave) base station transceiver may be operable to determine a resource shortage, i.e. a situation in which the resources it is allowed to use to serve a certain user (note that these can be operator specific) would not be enough to fulfill a certain service demand, e.g. QoS requirements for a certain user, and inform the master base station transceiver apparatus about this situation, e.g. in terms of requesting additional or alternative radio resources.

Embodiments further provide a method for a base station transceiver for a mobile communication system. The mobile communication system comprises a mobile transceiver, which is to be associated to a neighbor base station transceiver. The method comprises associating the mobile transceiver with the neighbor base station transceiver. The method further comprises scheduling a radio resource from a plurality of radio resources for communicating with the mobile transceiver and determining a subset of radio resources from the plurality of radio resources for enabling a communication between the neighbor base station transceiver and the mobile transceiver prior to associating the mobile transceiver with the neighbor base station transceiver.

Embodiments further provide a method for a base station transceiver for a mobile communication system. The mobile communication system comprises a mobile transceiver, which is to be associated by a neighbor base station transceiver to the base station transceiver. The method comprises receiving information on a subset of radio resources from a plurality of radio resources from the neighbor base station transceiver. The method further comprises scheduling a radio resource from the subset of the plurality of radio resources for communicating with the mobile transceiver.

Some embodiments comprise a digital control circuit installed within the apparatus for performing the method. Such a digital control circuit, e.g. a Digital Signal Processor (DSP), needs to be programmed accordingly. Hence, yet further embodiments also provide a computer program having a program code for performing embodiments of one or more of the above methods, when the computer program is executed on a computer or a digital processor.

### Brief description of the Figures

Some embodiments of apparatuses and/or methods will be described in the following by way of example only, and with reference to the accompanying figures, in which
Fig. 1 shows an embodiment of an apparatus for a base station transceiver and an embodiment of an apparatus for a neighboring base station transceiver;
Fig. 2 illustrates an overview of an embodiment in an eNB;
Fig. 3 illustrates an overview of the signaling in an embodiment;
Fig. 4 shows details of a MAC Scheduler, its signaling, and information signaling in an embodiment;
Fig. 5 depicts a non-mobility scenario in an embodiment;
Fig. 6 shows network roaming with HetNet sharing tools in an embodiment;
Fig. 7 shows network roaming with HetNet sharing tools in an embodiment when a cell is not shared;
Fig. 8 shows network roaming with HetNet sharing tools in an embodiment when a cell is partially shared;
Fig. 9 shows network roaming with HetNet sharing tools in an embodiment where a mobile transceiver may not handover between two cells of the same operator;
Fig. 10 shows network roaming with HetNet sharing tools in an embodiment where a mobile transceiver may handover between two cells of the same operator;
Fig. 11 shows network roaming with HetNet sharing tools in an embodiment where two mobile transceivers may handover to a cell of another operator;
Fig. 12 shows a block diagram of a flow chart of an embodiment of a method for a base station transceiver; and
Fig. 13 shows a block diagram of a flow chart of an embodiment of a method for a base station transceiver.

### Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

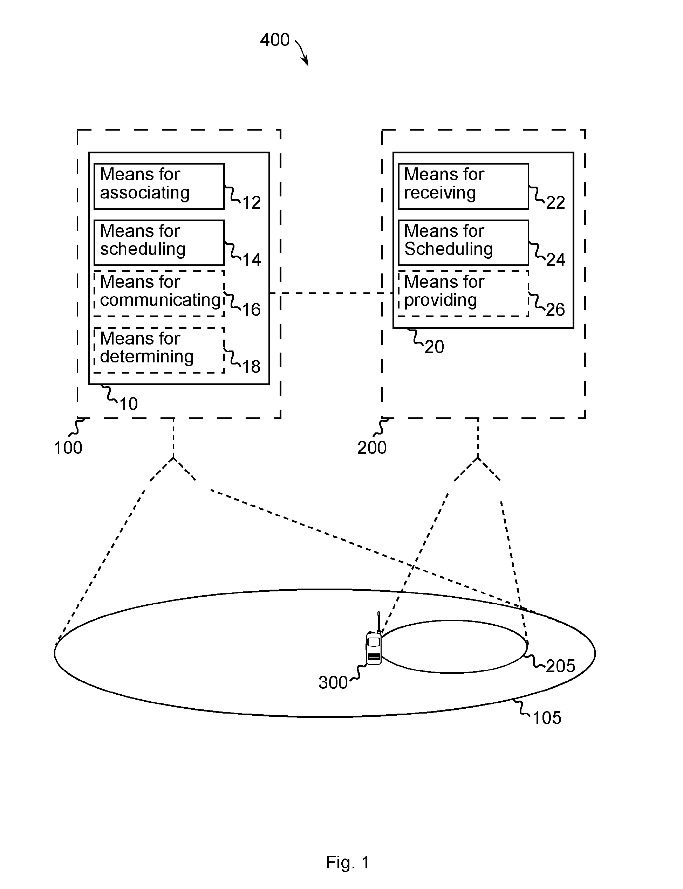

Fig. 1 shows an embodiment of an apparatus 10 for base station transceiver 100 and an embodiment of an apparatus 20 for a neighboring base station transceiver 200. Optional components are shown in dashed lines. Fig. 1 shows the apparatus 10 for the base station transceiver 100 in a mobile communication system 400, which assumed to an LTE or LTE-A communication system in line with the 3GPP specifications. The base station transceivers 100, 200 correspond to eNBs 100, 200. The mobile communication system 400 further comprises a mobile transceiver 300, which is to be associated to the neighbor base station transceiver 200. At least two different variant of associating the mobile transceiver 300 to the neighbor base station transceiver 200 by the base station transceiver 100 will be distinguished in the following. The first one is a re-association or handover from the base station transceiver 100 to the neighbor base station transceiver 200. The other one is an initial access or an admission of the mobile transceiver 300 at the neighbor base station transceiver 200. The apparatus 10 comprises means for associating 12 the mobile transceiver 300 with the neighbor base station transceiver 200.

In the embodiment the means for associating 12 corresponds to a controller carrying out radio resource management using the RRC protocol. The apparatus 10 further comprises means for scheduling 14 a radio resource from a plurality of radio resources for communicating with the mobile transceiver 300 and for determining a subset of radio resources from the plurality of radio resources for enabling a communication between the neighbor base station transceiver 200 and the mobile transceiver 300 prior to associating the mobile transceiver 300 with the neighbor base station transceiver 200. The means for associating 12 and the means for scheduling 14 are coupled. The means for scheduling 14 corresponds to a MAC entity within the LTE protocol stack; it may be implemented on any kind of controller or processor, e.g. together with the above RRC entity. In other words, the MAC scheduler 14 determines a subset of radio resources to be used by the neighbor base station transceiver 200, before the UE 300 is handed over using RRC 12 from the eNB 100 to the neighboring eNB 200.

Fig. 1 further illustrates the apparatus 20 for the neighboring base station transceiver 200 or eNB 200 in the LTE or LTE-A system 400. The mobile transceiver 300 is to be associated to the eNB 200 by eNB 100. The apparatus 20 comprises means for receiving 22 information on a subset of radio resources from a plurality of radio resources from the eNB 100 and means for scheduling 24 a radio resource from the subset of the plurality of radio resources for communicating with the mobile transceiver 300. The means for receiving 22 is coupled with the means for scheduling 24. The means for receiving 22 corresponds to the X2 interface towards the eNB 100 with the according protocols. The means for scheduling 24 corresponds to a MAC scheduler or scheduling entity of the apparatus 20 in eNB 200 and can be implemented on any kind of controller or processor running one or more protocols of the protocol stack of eNB 200.

Moreover, the base station transceiver 100 and the neighbor base station transceiver 200 are shared between two or more operators. Such an environment could also occur in a distributed or in a "cloud" RAN environment in which processing entities can be centralized or distributed. All means can be processed via one or more processing entities, in this case also the X2 interface would collapse into an internal calculation or bus between at least two processes or processors. The associating, i.e. admission or handover, depends on a frame contract between the operators and the relation between the subset of radio resources and the plurality of radio resources, i.e. which share of the plurality of radio resources can be scheduled to a mobile of a certain operator, is predetermined.

As indicated in Fig. 1 both eNBs have one or more antennas and both eNBs have a certain coverage area 105, 205. Furthermore, eNB 100 has coverage area 105, which surrounds the coverage area 205 of the neighbor eNB 200. The apparatus 10 comprises means for communicating 16 with the neighbor eNB 200. The means for communicating 16 can be coupled to the means for associating 12 and it corresponds to the X2 implementation of eNB 100, which is operable to communicate with eNB 200, i.e. with the means for receiving 22. The means for communicating 16 is operable to communicate information on the subset of radio resources to the neighbor eNB 200, information on a quality of service of the mobile transceiver 300, information on a lifetime of the subset of the subset of radio resource, and/or information on a trigger on when the subset of resources should not be used by the neighbor base station transceiver 200 anymore, which will be detailed subsequently.

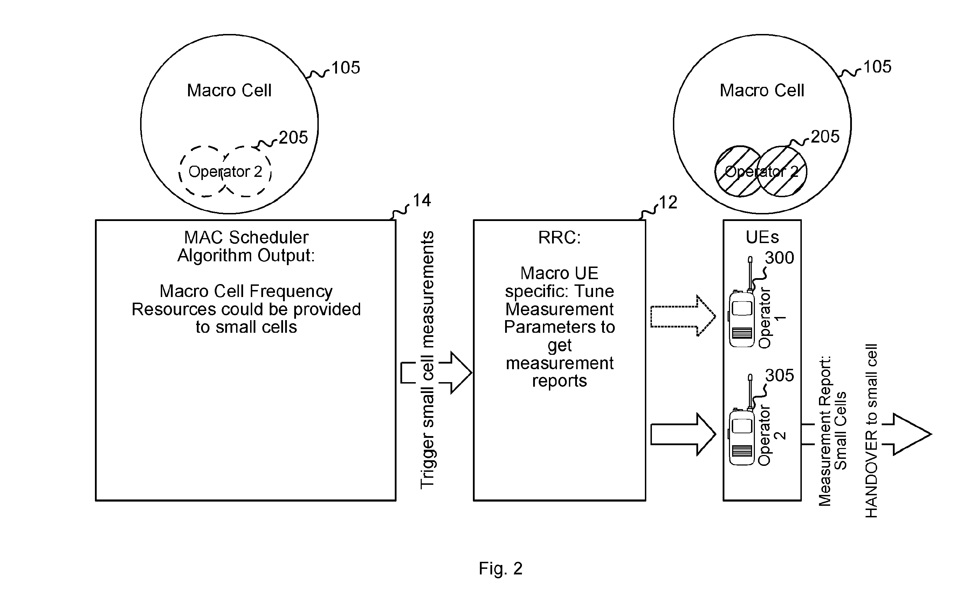

This embodiment uses an interworking between the MAC scheduler 14 and the RRC layer 12 that provides the needed functionality so that a given sharing case in the HetNet 400 scenario can be realized. A control mechanism to control the access to the small cell 205 is performed by dynamic settings of measurement events per operator, per user of the different operators, respectively. This is further illustrated in Fig. 2. In embodiments the MAC layer 14 (scheduler/means for scheduling) and the RRC layer 12 (means for determining/means for associating) and the related interfaces may be implemented. In the following function blocks show the dependencies and implication of the scheduling decision for the given HetNet scenario in the described sharing case. Details how the macro 105 and small cell 205 interwork; e.g. for frequency resource exchange are given subsequently.

Fig. 2 illustrates an overview of an embodiment in an eNB 100, with MAC scheduler 14 and RRC 12. Hence, Fig. 2 depicts a network roaming scenario with HetNet 400 sharing and the MAC scheduler's 14 interfaces and tasks in the apparatus 10 of eNB 100. The MAC scheduler 14 is coupled to RRC 12, which is operable to prepare measurements at the UE 300, 305. Fig. 2 shows a macro cell 105, which is established by eNB 100. In the macro cell coverage area 105 there are multiple small cells, one of which is small cell 205 established by eNB 200. Moreover, the macro cell 105 is shared between two operators, Operator 1 and Operator 2, for example, with an equal share. The small cell 205 is operated by Operator 2 having agreed on a partial share frame contract with Operator 1.

The MAC scheduler 14 of eNB 100 determines frequency resources, which could be provided to small cells, i.e. the subset of radio resources corresponds to frequency resources in this embodiment. The MAC scheduler 14 may trigger small cell measurements at RRC 12, for example, when resources become short in the macro cell 105. In other words, RRC 12 can be informed by the MAC scheduler 14 on radio resources, which could be used by a neighbor cell or neighbor eNB. RRC 12 may then configure according measurements at a UE, allowing RRC 12 to seek for such a neighbor cell based on the corresponding measurement results. In other embodiments RRC 12 may already have knowledge on a neighbor cell, which could use at least some of the radio resources informed by the MAC scheduler 14. For example, such knowledge may be obtained from a database, for example, the informed radio resources or a subset thereof may serve as an entry value into said data base. Hence, in some embodiments RRC 12 may switch a neighbor cell on based on the radio resources informed by the MAC scheduler 14.

In line with Fig. l, the apparatus 10 further comprises means for determining 18 information on a measurement configuration, which refers to a signal quality measurement carried out by the mobile transceiver 300 on signals received from the neighboring eNB 200. The means for determining is coupled to RRC 12, and can be implemented on the same or a different controller or processor. As shown in Fig. 2 RRC has multiple UEs 300, 305 under its control, where UE 300 is assigned to Operator 1 and UE 305 is assigned to Operator 2. In some embodiments, the MAC scheduler 14 can be operable to provide information on one or more neighbor eNB to the means for determining 18 the information on the measurement configuration.

RRC 12 can now tune or configure measurements at the different UEs 300, 305 to receive measurement reports on the small cells. This can be carried out, for example, by configuring parameter threshold values or by cell black listing. That is to say that the apparatus 10 is further operable to receive information on a measurement result from the mobile transceiver 300. The means for scheduling 14, i.e. MAC 14, can be operable to determine the subset of radio resources based on the information on the measurement result. RRC 12 is operable to determine a handover based on the measurement result. The apparatus 10 can be further operable to determine, based on the information on the measurement results, whether an overall radio resource efficiency can be increased by the associating, e.g. whether a handover would be beneficial for the overall performance on the network 400.

Moreover, the means for scheduling 14, i.e. MAC 14, is operable to determine information on a load condition of eNB 100. The means for associating 12, i.e. RRC 12, is operable to base the handover decision of UE 300 to eNB 200 on the information on the load condition of eNB 100. Moreover, the means for determining the 18 the information on the measurement configuration can be operable to base the measurement configuration on the load information on eNB 100. Hence, the settings of measurement events can depend on the current cell 105 load, on the current radio performance in the source (macro/micro) cell, and/or on expected radio performance in the target (macro/micro) cell.

That is to say that the means for communicating 16 is further operable to receive information on a load condition or a predicted performance of one of the UEs 300, 305 from the neighbor eNB 200 prior to associating, i.e. prior to a handover or an admission. The means for associating 12 can be operable to base a decision on associating, i.e. to handover or to admit, the UE 300 with the neighbor eNB 200 on the information on the load condition or the predicted performance of the UE 300 from the eNB 200. On the neighbor eNB 200 side, the apparatus comprises corresponding means for providing 26 information on the its load condition or a predicted performance of a UE 300, 305 to base station transceiver 100.

Moreover, the apparatus 10 can be operable to provide information on QoS requirement for the UE 300, information on a lifetime of the subset of the subset of radio resources, and/or information on a trigger on when the subset of resources should not be used by the neighbor eNB 200 anymore to eNB 200 prior to handover.

On the neighbor eNB 200 side, the means for receiving 22 is further operable to receive information on a QoS of the mobile transceiver 300, information on a lifetime of the subset of radio resource, and/or information on a trigger on when the subset of resources should not be used by the neighbor eNB 200 anymore. The means for scheduling 24 is operable to base a decision on which radio resources from the subset to schedule on the received information.

Details on the handover procedure and the measurements can be found in 3GPP TS 36.331. For example, measurement objects can be defined as the objects on which the UE shall perform the measurements. For intra-frequency and inter-frequency measurements a measurement object is a single E-UTRA carrier frequency. Associated with this carrier frequency, E-UTRAN can configure a list of cell specific offsets and a list of 'blacklisted' cells. Blacklisted cells are not considered in event evaluation or measurement reporting. The measurement procedures distinguish the following types of cells. The serving cell(s)- these are the Primary serving Cell (PCell) and one or more Secondary serving Cells (SCells) if configured for a UE supporting Carrier Aggregation (CA). Listed cells are cells listed within the measurement object(s). Detected cells are cells that are not listed within the measurement object(s) but are detected by the UE on the carrier frequency(ies) indicated by the measurement object(s). Moreover, details on the measurement report triggering can be found in the same specification, which also provides corresponding events for measurement reporting, which can be set UE specific.

Hence, based on the measurement results, the information on the load in one or more cells, the frame contract, etc. frequency resources can be allocated at the neighbor eNB 200, such that UE 300 of Operator 1 can be served, which is indicated by the hachured small cell 205 on the right hand side of Fig. 2 as opposed to the blank small cell 205 on the left of Fig. 2. In further embodiments, the neighbor eNB 200, upon resource shortage, may request to be assigned further frequency resources at the eNB 100. The means for providing 26 can then be further operable to request radio resources from eNB 100 based on a load condition of eNB 200.

In line with the embodiment depicted in Fig. 2, the macro cell scheduler 14 is enhanced to decide whether frequency spectrum resources are provided to the small cell 200. It is to be noted that frequency spectrum is just one dimension of a plurality of radio resources, which are conceivable. In other embodiments other dimensions or combinations of dimensions can be used, e.g. the time dimension or even a mixture like ABS (Almost Blanking Sub-frame), frequency spectrum available for certain times, etc. The internal algorithms and parameters (input/output) are extended to enable the MAC scheduler 14 to trigger the RRC layer 12 to add or remove small cell IDs 200 from its measurement configurations on a UE 300, 305 basis, i.e. operator specific. So the macro cell RRC layer 12 can control the visibility of the small cell 200 for measurements UE 300, 305 specific, e.g. with the help of measurement event parameters or by defining the type of the small cell 200, e.g. listed or blacklisted cell. Embodiments may therewith provide dynamicity to add or remove small cells from the macro cell point of view as target cells for handover, e.g. in a HetNet or a macro cell 100 only scenario.

In other words, the means for scheduling 14 can correspond to a multi-operator-scheduler 14. According to the multi-operator-scheduler 14 performance parameters, the MAC layer 14 can trigger the RRC layer 12 to adapt measurement configurations accordingly. This means the macro cell 105 could steer UEs for operator specific reporting of a small cell 205. With this measure, the macro cell RRC layer 12 can control the visibility of the small cell 205 for measurements in a UE or operator specific way, e.g. by tuning measurement event reporting parameters (i.e. cell individual offset per UE). Another way to differentiate cell access to small cells would be by introducing white listed or blacklisted cells in an operator specific way in a future network release.

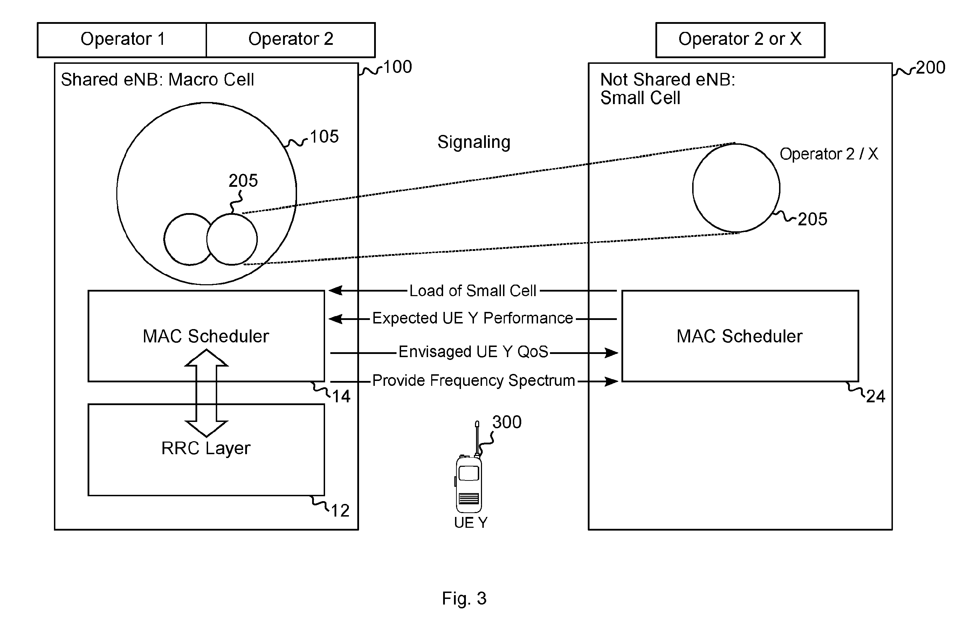

Fig. 3 shows the interaction between the macro 105 and small cell 205 with the help of signaling information, i.e. the MAC scheduler 14 signaling and information exchange between macro eNB 100 and small cell eNB 200. Fig. 3 shows the signaling in an embodiment enabling network roaming with HetNet sharing and shows the MAC scheduler 14 interfacing. Fig. 3 depicts the eNB 100 on the left hand side with the RRC layer 12 and the MAC scheduler 14. As can be seen, eNB 100 establishes a macro cell 105 surrounding a small cell 205 established by the neighbor eNB 200. The neighbor eNB 200 also comprises a MAC scheduler 24. The UE 300 is shown between the eNBs 100, 200. Macro cell 105 is shared between Operators 1 and 2, the small cell 205 is not shared, i.e. it is operated by Operator 2 or another Operator X. Since the small cell 205 is not shared Operators 1 and 2 may have a roaming agreement, i.e. a UE 300 assigned to Operator 1 may use the services of the small based on an according payment plan.

As shown in Fig. 3 the small cell eNB 200 may provide information on the load of the small cell 205 and information on an expected performance of UE 300 to the eNB 100. In turn eNB 100 may envisage the QoS for UE 300 when served by eNB 200 and provide according information on frequency resources to be used by eNB 200 to serve UE 300. Hence, the small cell 205 provides the conditions of its cell load and the predicted UE performance in the small cell 205. The UE performance value could be referenced to a given amount of resources and radio quality. The macro cell 105, after deciding to move a certain UE 300 to the small cell 205, signals details of frequency spectrum, e.g. IDentification Resource Blocks (RB ID), amount of RB, etc., to be used for a specific UE 300 or multiple UEs. The macro cell 105 further provides information on envisaged QoS for the UE 300, which will be moved later with a handover procedure. The macro cell 105 further provides information on a lifetime of the provided resources and information on triggers, e.g. when to immediately return the provided resources.

In this embodiment tight interworking between the macro cell 105 and the small cell 205 is carried out, e.g. HetNet coordination as enhanced Inter Cell Interference Coordination (eICIC). This interworking can be standardized to interconnect a macro cell 105 with small cells 205 from different suppliers. The clustered provision of frequency resources can be realized by the carrier aggregation feature in LTE.

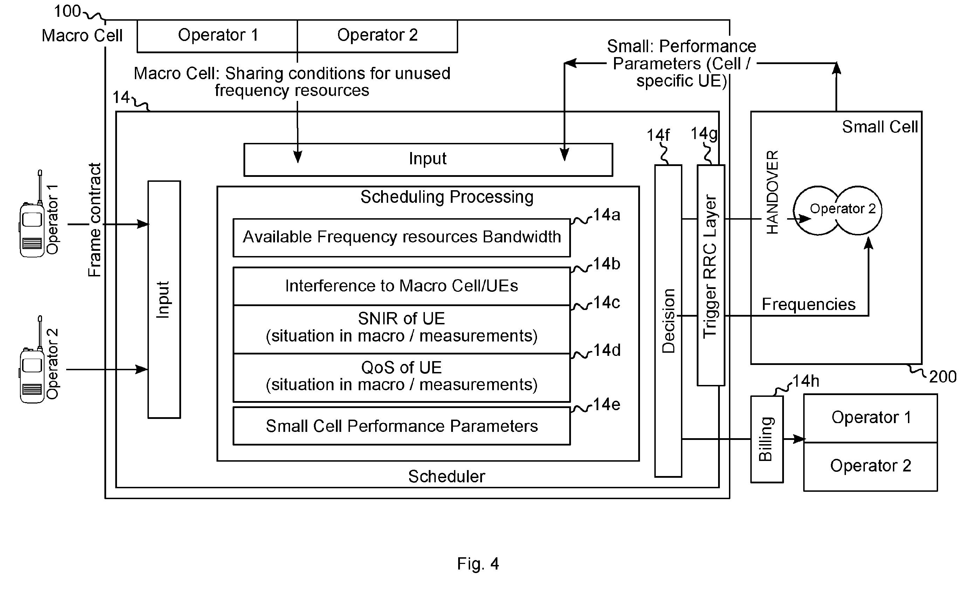

Fig. 4 shows details of a MAC Scheduler 14, its signaling, and information signaling between a macro 105 and a small cell 205 in an embodiment. In other words, Fig. 4 illustrates the scheduler's 14 interfaces and tasks. On the left hand side Fig. 4 shows two Operators having a frame contract, information which is input into the scheduler 14 of eNB 100 establishing a macro cell. Moreover, sharing conditions for unused frequency resources and small cell performance parameters on the small cell itself and/or on specific UEs are input into the scheduler 14. The scheduler 14 may then carry out a number of processing steps. The scheduler 14 may determine 14a the available frequency resources or bandwidth and it may take into account 14b the interference condition of the macro cell UEs. For example, it may determine 14c the SINR of one or more UEs with the help of measurements configured by RRC.

Furthermore, it may determine 14d the QoS of a UE, i.e. the UE's situation in the macro cell using the measurement results. It may then determine 14e small cell 205 performance parameters and it may, based on the determined information, decide 14f to hand the UE over to the neighbor eNB 200 establishing the small cell, to admit the UE to the neighbor cell 200, respectively. It may then inform the small cell eNB 200 about the frequency resource and trigger 14g the RRC layer for the actual handover. The small cell eNB 200 may accept the handover and serve the UE based on the informed frequency resources. Furthermore, based on the decision 14f billing information 14h may be stored or assigned to the respective operators.

Fig. 4 shows the overall interaction between the macro and small cell. Additional decision parameters for the scheduling process are the frame contract parameters, cost of frequency resources, e.g. cost per units per operator, conditions when to provide unused frequencies to the small cell, and conditions when to return resources provided to the small cell. A billing interface 14h, which may differentiate between shared frequency resources used in the macro cell and small cell, may determine billing information on an operator specific basis.

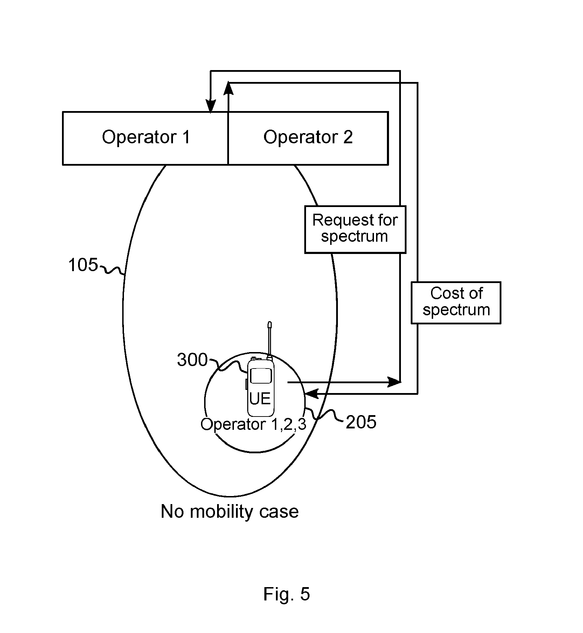

Another embodiment will be described for a static case with the help of Fig. 5. In this embodiment frequency bidding in a HetNet sharing scenario will be described, where no mobility triggered handover takes place. The information signaling between a macro cell 105 and a small cell 205 will be described. Fig. 5 shows the macro cell 105 which is shared between Operator 1 and Operator 2. The macro cell 105 surrounds a small cell 205. Small cell Operator 1, 2, 3 do not own frequency spectrum for the small cell 205 and offer service to static small cell UEs 300, which are static and hence mobility triggered handover is not an issue in this case. Nevertheless, the macro cell 105 will decide whether the UE 300 can be associated or re-associated with the small cell 205, where associating UE 300 with the small cell 205 corresponds to admitting UE 300 to the small cell 205 by assigning respective resources to eNB 200, if frequency resources can be taken from macro cell 105 according to macro cell load, e.g. frequency usage distribution etc. and if frequency resources auctioning bidding was successful. Hence, in this scenario the small cell 205 requests spectrum from the macro cell 105 and the macro cell 105 returns information on the cost of the spectrum to the small cell 205, and thereby associates the UE 300 with the small cell 205. The small cell 205 can then serve the UE 300 after associating with it and the according operator will be billed. The present embodiment may solve the non-mobility case, see Fig. 5, where the UE 300 does not move, but may still first register with the macro cell 105 before being associated to the small cell 205, or, after the above procedure, UE 300 may associate directly with the small cell 205. "Proactive small cells" may ask for unused macro cell frequency resources in a bidding/auctioning kind of way. The small cell 205 may use these resources to schedule static UEs independently from macro cell 105 and macro cell UEs.

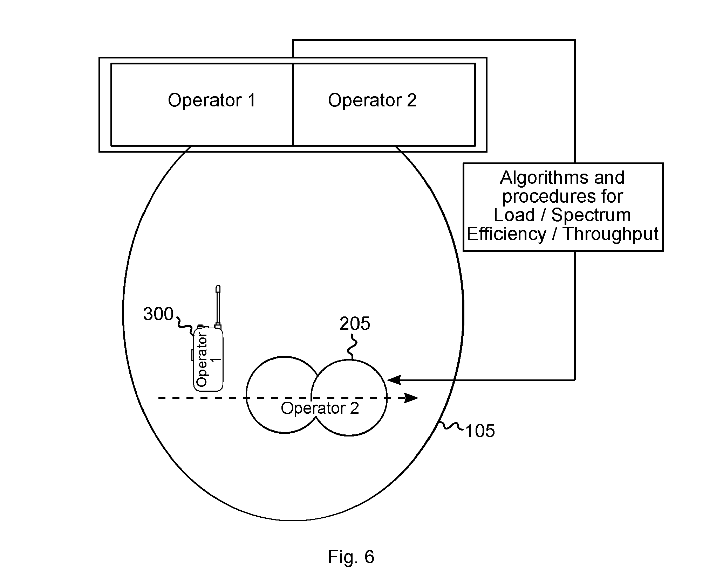

Fig. 6 shows network roaming with HetNet sharing tools in an embodiment. Operator 1 and 2 share the macro cell 105, which surrounds one or more small cells 205, which are operated by Operator 2 only. UE 300, which is assigned to Operator 1 moves through the coverage of the small cell 205, which is not shared. Between eNB 100 establishing the macro cell 105 and eNB 200 establishing the small cell 205 the above described algorithms and procedures for load/spectrum sharing taking into account the efficiency and throughput of the network are carried out.

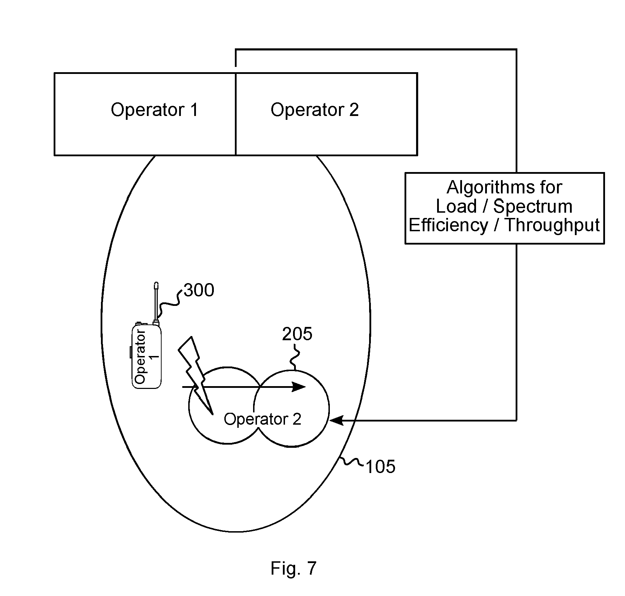

Fig. 7 shows network roaming with HetNet sharing tools in an embodiment when a cell is not shared. Fig. 7 illustrates similar entities as they have been described above. Operator 1 UE 300 does not enter the small cell 205 of Operator 2. Both operators agreed that small cells 205 can only use unused frequency spectrum from the macro cell 105, e.g. for interference avoidance. No handover from Operator 1 to Operator 2 cells are allowed per se, hence Operator 2 pays Operator 1 for the usage of frequency resources in the small cell 205.

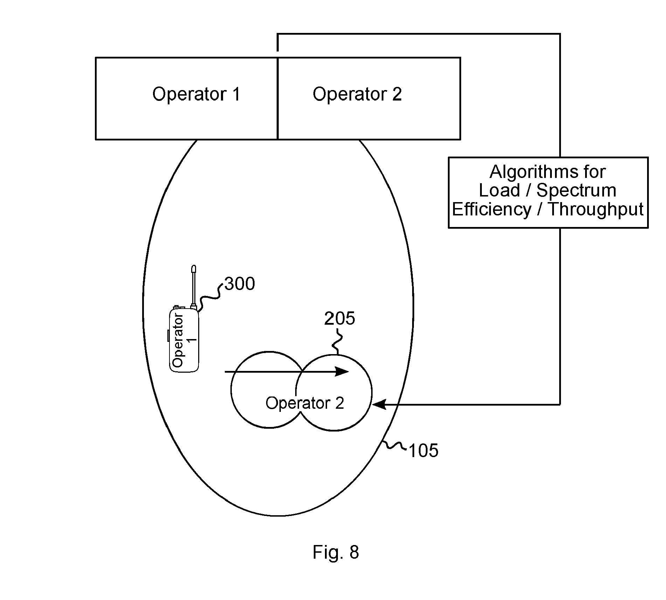

Fig. 8 shows network roaming with HetNet sharing tools in an embodiment when a cell is partially shared. Fig. 8 illustrates similar entities as they have been described above. Operator 1 UE 300 enters the small cell 205 of Operator 2. According to agreed/given distribution ratio ofUEs currently in the small cell 205, the UE 300 is handed over to the small cell 205 if Operator 1 UE 300 gains performance by the handover to the small cell 205 from mobile communication point of view, e.g. higher SINR, more allocated bandwidth, etc.

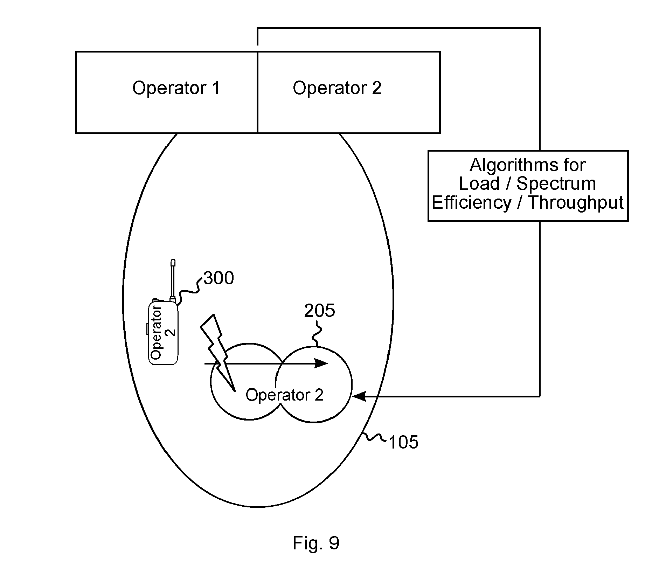

Fig. 9 shows network roaming with HetNet sharing tools in an embodiment where a mobile transceiver 300 may not handover between two cells of the same operator. Fig. 9 illustrates similar entities as they have been described above, except for the UE 300 being assigned to Operator 2, which also operates small cell 205. Operator 2 UE 300 does not enter the small cell 205 of Operator 2 if no frequency resources can be taken from shared macro cell 105 according to the macro cell load, frequency usage distribution, interference probability etc., or Operator 2 UE 300 does not gain performance by handover to small cell 205 from mobile communication point of view, e.g. higher SNIR, more allocated bandwidth, etc.

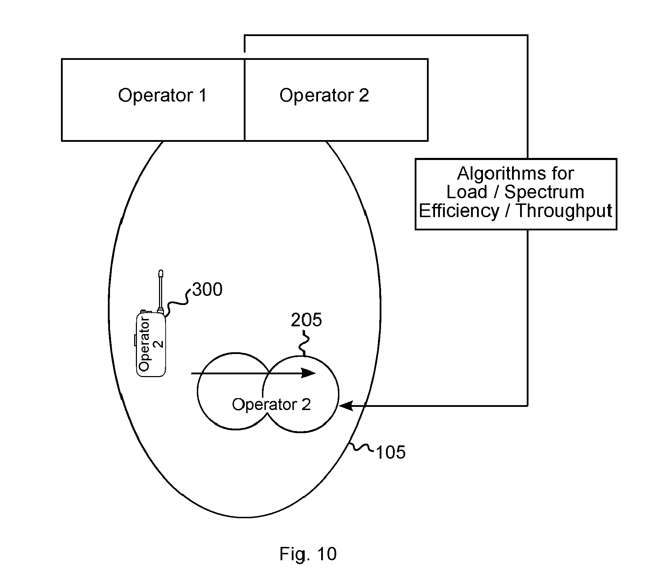

Fig. 10 shows network roaming with HetNet sharing tools in an embodiment where a mobile transceiver 300 may handover between two cells of the same operator. Fig. 10 illustrates similar entities as they have been described above; UE 300 is assigned to Operator 2, which also operates small cell 205. Operator 2 UE 300 enters the small cell 205 of operator 2 if frequency resources can be taken from shared macro cell 105 according to the macro cell load, e.g. frequency usage distribution etc., and if Operator 2 UE 300 gains performance by the handover to small cell 205 from mobile communication point of view, e.g. higher SINR, more allocated bandwidth, etc.

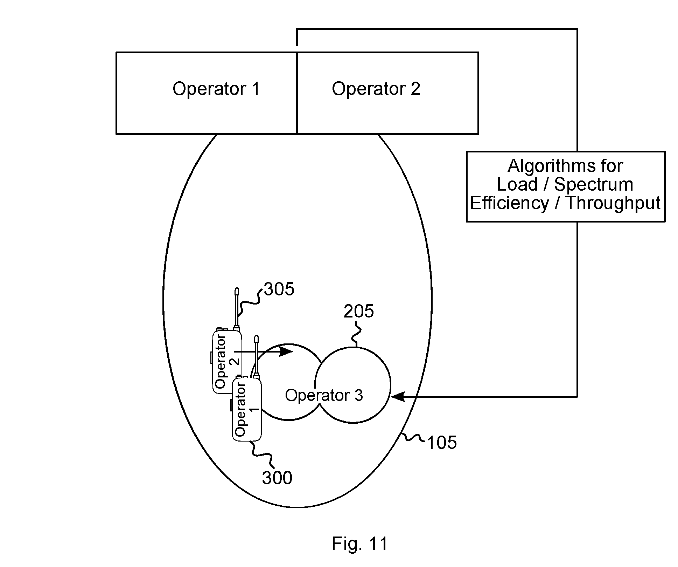

Fig. 11 shows network roaming with HetNet sharing tools in an embodiment where two mobile transceivers 300, 305 may handover to a small cell 205 of another operator. Fig. 11 illustrates similar entities as they have been described above; UE 300 is assigned to Operator 1, UE 305 is assigned to Operator 2, Operator 3 operates small cell 205. New small cell Operator 3 does not own frequency spectrum and offers service to the macro cell operator/s. If frequency resources can be taken from macro cell 105 according to the macro cell load, e.g. frequency usage distribution etc., and if macro Operators 1 and 2 UEs 300, 305 gain performance by the handover to the small cell 205 from mobile communication point of view, e.g. higher SINR, more allocated bandwidth, etc. UEs 300, 305 may handover to the small cell 205.

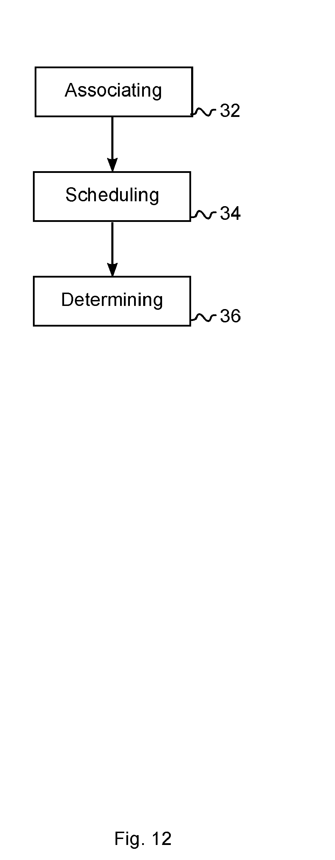

Fig. 12 shows a block diagram of a flow chart of an embodiment of a method for a base station transceiver 100 for a mobile communication system 400. The mobile communication system 400 comprises a mobile transceiver 300, which is to be associated to a neighbor base station transceiver 200. The method comprises a step of associating 32 the mobile transceiver 300 with the neighbor base station transceiver 200. The method comprises a further step of scheduling 34 a radio resource from a plurality of radio resources for communicating with another mobile transceiver. The method comprises a further step of determining 36 a subset of radio resources from the plurality of radio resources for enabling a communication between the neighbor base station transceiver 200 and the mobile transceiver 300 prior to associating the mobile transceiver 300 with the neighbor base station transceiver 200.

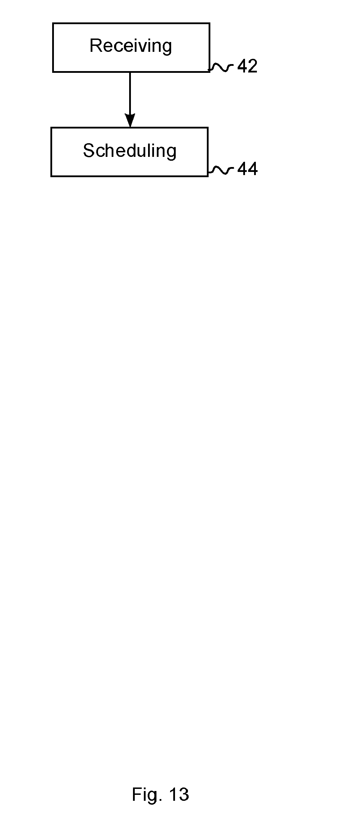

Fig. 13 shows a block diagram of a flow chart of an embodiment of a method for a base station transceiver 200 for a mobile communication system 400. The mobile communication system 400 comprises a mobile transceiver 300, which is to be associated to the base station transceiver 200 by a neighbor base station transceiver 100. The method comprises a step of receiving 42 information on a subset of radio resources from a plurality of radio resources from the neighbor base station transceiver 100 and a step of scheduling 44 a radio resource from the subset of the plurality of radio resources for communicating with the mobile transceiver 300.

Moreover, embodiments may provide a computer program for performing one of the above methods, when the computer program is executed on a computer or processor or a programmable hardware component.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing a certain function, respectively. Hence, a "means for something" may as well be understood as a "means being adapted or suited or operable for something". A means being adapted for performing a certain function does, hence, not imply that such means necessarily is performing said function (at a given time instant).

Functions of various elements shown in the figures, including any functional blocks, such as "means", "means for associating", "means for scheduling", "means for communicating ", "means for determining", "means for receiving", "means for providing", may be provided through the use of dedicated hardware, as e.g. a processor, "an associator", "a scheduler", "a communicator", "a determiner", "a receiver", "a provider ", as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

## Claims

1. An apparatus (10) for a base station transceiver (100) for a mobile communication system (400), the mobile communication system (400) comprising a mobile transceiver (300), which is to be associated to a neighbor base station transceiver (200), the apparatus (10) comprising
means for associating (12) the mobile transceiver (300) with the neighbor base station transceiver (200); and
means for scheduling (14) a radio resource from a plurality of radio resources for communicating with another mobile transceiver and for determining a subset of radio resources from the plurality of radio resources for enabling a communication between the neighbor base station transceiver (200) and the mobile transceiver (300) prior to associating the mobile transceiver (300) with the neighbor base station transceiver (200).

2. The apparatus (10) of claim 1, wherein the base station transceiver (100) and the neighbor base station transceiver (200) are shared between two or more operators, wherein the associating depends on a frame contract between the operators, and wherein a relation between the subset of radio resources and the plurality of radio resources is predetermined.

3. The apparatus (10) of claim 1, wherein the base station transceiver (100) has a coverage area (105) which surrounds the coverage area (205) of the neighbor base station transceiver (200).

4. The apparatus (10) of claim 1, further comprising means for communicating (16) with the neighbor base station transceiver (200), wherein the means for communicating (16) is operable to communicate information on the subset of radio resources to the neighbor base station transceiver (200), information on a quality of service of the mobile transceiver (300), information on a lifetime of the subset of radio resource, and/or information on a trigger on when the subset of resources should not be used by the neighbor base station transceiver (200) anymore.

5. The apparatus (10) of claim 4, wherein the means for communicating (16) is further operable to receive information on a load condition or a predicted performance of the mobile transceiver (300) from the neighbor base station transceiver (200) prior to associating, and wherein the means for associating (12) is operable to base a decision on associating the mobile transceiver (300) with the neighbor base station transceiver (200) on the information on the load condition or the predicted performance of the mobile transceiver (300) of the neighbor base station transceiver (200), and/or
wherein the means for scheduling (14) is operable to determine information on a load condition of the base station transceiver (100), and wherein the means for associating (12) is operable to base a decision on associating the mobile transceiver (300) with the neighbor base station transceiver (200) on the information on the load condition of the base station transceiver (100).

6. The apparatus (10) of claim 1, further comprising means for determining (18) information on a measurement configuration, the measurement configuration referring to a signal quality measurement carried out by the mobile transceiver (300) on signals received from the neighboring base station transceiver (200).

7. The apparatus (10) of claim 6, wherein the means for scheduling (14) is operable to provide information on radio resources for another neighbor base station transceiver to the means for determining (18) the information on the measurement configuration, and/or
wherein the apparatus (10) is further operable to receive information on a measurement result from the mobile transceiver (300) and wherein the means for scheduling (14) is operable to determine the subset of radio resources based on the information on the measurement result.

8. The apparatus (10) of claim 6, wherein the apparatus (10) is further operable to receive information on a measurement result from the mobile transceiver (300) and wherein the means for scheduling (14) is operable to determine the subset of radio resources based on the information on the measurement result, the apparatus (10) further being operable to determine, based on the information on the measurement results, whether an overall radio resource efficiency can be increased by the associating.

9. An apparatus (20) for a base station transceiver (200) for a mobile communication system (400), the mobile communication system (400) comprising a mobile transceiver (300), which is to be associated to the base station transceiver (200) by a neighbor base station transceiver (100), the apparatus (20) comprising
means for receiving (22) information on a subset of radio resources from a plurality of radio resources from the neighbor base station transceiver (100); and
means for scheduling (24) a radio resource from the subset of the plurality of radio resources for communicating with the mobile transceiver (300).

10. The apparatus (20) of claim 9, wherein the base station transceiver (200) and the neighbor base station transceiver (100) are shared between two or more operators, wherein the associating depends on a frame contract between the operators, and wherein a relation between the subset of radio resources and the plurality of radio resources is predetermined, and/or
wherein the means for receiving (22) is further operable to receive information on a quality of service of the mobile transceiver (300), information on a lifetime of the subset of radio resources, and/or information on a trigger on when the subset of resources should not be used by the base station transceiver (200) anymore, and wherein the means for scheduling (24) is operable to base a decision on which radio resources from the subset to schedule on the received information.

11. The apparatus (20) of claim 9, further comprising means for providing (26) information on a load condition of the base station transceiver (200) or a predicted performance of the mobile transceiver (300) to the neighbor base station transceiver (100).

12. The apparatus (20) of claim 11, wherein the means for providing (26) is further operable to request radio resources from the neighbor base station transceiver (100) based on a load condition of the base station transceiver.

13. A method for a base station transceiver (100) for a mobile communication system (400), the mobile communication system (400) comprising a mobile transceiver (300), which is to be associated to a neighbor base station transceiver (200), the method comprising
associating (32) the mobile transceiver (300) with the neighbor base station transceiver (200);
scheduling (34) a radio resource from a plurality of radio resources for communicating with another mobile transceiver; and
determining (36) a subset of radio resources from the plurality of radio resources for enabling a communication between the neighbor base station transceiver (200) and the mobile transceiver (300) prior to associating the mobile transceiver (300) with the neighbor base station transceiver (200).

14. A method for a base station transceiver (200) for a mobile communication system (400), the mobile communication system (400) comprising a mobile transceiver (300), which is to be associated to the base station transceiver (200) by a neighbor base station transceiver (100), the method comprising
receiving (42) information on a subset of radio resources from a plurality of radio resources from the neighbor base station transceiver (100); and
scheduling (44) a radio resource from the subset of the plurality of radio resources for communicating with the mobile transceiver (300).

15. A computer program having a program code for performing one of the methods of claims 13 or 14, when the computer program is executed on a computer or processor.
